# EUROPEAN PATENT APPLICATION

(11) **EP 4 657 637 A1**
(43) Date of publication of application: **03.12.2025**
(21) Application number: 24868482.1
(22) Date of filing: 12.08.2024
(51) Int. Cl.: H01M 50/342, H01M 50/375, H01M 50/105, H01M 50/502, H01M 50/507, H01M 10/658, H01M 50/211

(54) **BATTERY MODULE AND BATTERY PACK INCLUDING SAME**

(30) Priority: 20.09.2023 KR 20230125887
(71) Applicant: LG Energy Solution, Ltd., Seoul 07335 (KR)
(72) Inventor: PARK, Jeong-Hoon, Daejeon 34122 (KR)
(74) Representative: Plasseraud IP
(86) International application number: PCT/KR2024/011989
(87) International publication number: WO 2025/063503

(57) **Abstract**

Disclosed is a battery module, which includes a cell stack including stacked battery cells; a module case configured to accommodate the cell stack and having a gas venting hole formed in a bottom plate located at a lower portion of the cell stack; and a venting guide unit including a needle member configured to be popped up from the gas venting hole to make a hole in the battery cell, and a needle stopper member configured to prevent the needle member from being popped up while deformation by heat or external force does not occur.

## Description

### TECHNICAL FIELD

The present disclosure relates to a battery module and a battery pack including the same, and more specifically, it relates to a battery module with excellent safety against thermal events and a battery pack including the same.

The present application claims priority to Korean Patent Application No. 10-2023-0125887 filed on September 20, 2023 in the Republic of Korea, the disclosures of which are incorporated herein by reference.

### BACKGROUND ART

As technology development and demand for various mobile devices, electric vehicles, energy storage systems (ESSs), or the like significantly increase, interest in and demand for secondary batteries as an energy source are rapidly increasing. Although nickel-cadmium batteries or nickel-hydrogen batteries have conventionally been used widely as secondary batteries, nowadays, lithium secondary batteries are widely used because they have advantages of free charging and discharging due to almost no memory effect, a very low self-discharge rate, and a high energy density, compared to nickel-based secondary batteries.

These lithium secondary batteries generally use lithium-based oxides and carbon materials as positive and negative electrode active materials, respectively. The lithium secondary batteries include an electrode assembly in which the positive and negative electrode plates, which are respectively coated with the positive and negative electrode active materials, are disposed with a separator therebetween, and an exterior case, i.e., a battery case, that seals and stores the electrode assembly with an electrolyte.

In general, secondary batteries may be classified, depending on the shape of the exterior case, into can-type secondary batteries in which the electrode assembly is accommodated in a metal can and pouch-type secondary batteries in which the electrode assembly is accommodated in a pouch of an aluminum laminate sheet.

Currently, the operating voltage of one lithium secondary battery cell widely used is approximately 2.5V to 4.5V. Therefore, in the case of electric vehicles or power storage devices that require large capacity and high output, a battery module or battery pack is configured by connecting multiple lithium secondary batteries in series and/or parallel and used as an energy source. In particular, in order to satisfy the output or capacity required for electric vehicles, the battery module or battery pack includes a large number of lithium secondary batteries.

Therefore, the battery modules or battery packs need measures to prevent fire or reduce its spread in case a thermal event occurs.

For example, in a situation where a thermal event occurs in a battery module, if gas or flame is generated and heat continues to accumulate inside, the heat may rapidly spread (thermal propagation) between battery cells. As a result, multiple battery cells may ignite simultaneously, which makes it difficult to extinguish the thermal event, and the battery module may explode, which may further expand the damage.

Accordingly, when a thermal event occurs in a battery module, a method is required to effectively discharge thermal energy inside the battery module so that thermal runaway propagation and ignition between the battery cells may be delayed as much as possible.

### DISCLOSURE

### Technical Problem

The present disclosure has been designed to solve the problems of the related art, and therefore the present disclosure is directed to providing a battery module capable of effectively relieving heat and pressure inside the battery module when a thermal event occurs in the battery module.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module comprising: a cell stack including stacked battery cells; a module case configured to accommodate the cell stack and having a gas venting hole formed in a bottom plate located at a lower portion of the cell stack; and a venting guide unit including a needle member configured to be popped up from the gas venting hole to make a hole in the battery cell, and a needle stopper member configured to prevent the needle member from being popped up while deformation by heat or external force does not occur.

The needle stopper member may be made of a material heat-meltable at a predetermined temperature.

The needle stopper member may have a notch line to be broken at a predetermined pressure.

The needle member may include an elastic member disposed vertically in the gas venting hole; a needle portion coupled to a top end of the elastic member; and an elastic body fixing portion coupled to a bottom end of the elastic member and fixed to the bottom plate of the module case.

The needle stopper member may include a blocking portion configured to block the needle portion at an upper portion of the gas venting hole; and a stopper fixing portion connected to the blocking portion and fixed to the bottom plate of the module case.

A notch line may be provided at a boundary of the blocking portion and the stopper fixing portion.

At least one of the blocking portion and the stopper fixing portion may be made of a heat-meltable resin material.

The needle portion may include a needle plate coupled to the top end of the elastic member and located at a lower portion of the blocking portion; and at least one needle configured to protrude from the needle plate.

The at least one needle may be configured to be stuck in the blocking portion.

The battery cells may be pouch-type battery cells, the gas venting hole may be provided in plurality at predetermined intervals along a width direction of the bottom plate, and the gas venting hole may be provided at a location vertically corresponding to a cell terrace formed by thermally fusing pouch sheets in the pouch-type battery cell.

The venting guide unit may be provided in each of the gas venting holes, and the gas venting hole and the venting guide unit may be provided at a front side and a rear side of the bottom plate of the module case.

The module case may include a top plate configured to cover an upper portion of the cell stack; a bottom plate configured to cover the lower portion of the cell stack; a pair of side plates configured to cover both sides of the cell stack, respectively; and a pair of end covers configured to cover a front side and a rear side of the cell stack, respectively.

The battery module may further comprise bus bars electrically connected to electrode leads provided to the battery cells; and a bus bar frame configured to support the bus bars and having lead slots through which the electrode leads passes, the bus bar frame being mounted to a front portion or a rear portion of the cell stack, and the bus bars may include a first bus bar and a second bus bar arranged to overlap each other with the electrode lead being interposed therebetween, and the electrode lead may be compressively fixed between the first bus bar and the second bus bar.

The battery cells may be pouch-type battery cells, which are stacked in one direction in a state where broad surfaces thereof are erected, the cell stack may include a plurality of barrier plates interposed between the battery cells at predetermined intervals along the one direction to restrict movement of heat or gas between the battery cells, and each of the plurality of barrier plates may have a distal end fitted into the bus bar frame so that the battery cells and the gas venting holes are partitioned into a predetermined number.

According to one aspect of the present disclosure, there may also be provided a battery pack including the battery module described above.

### Advantageous Effects

According to one aspect of the present disclosure, it is possible to provide a battery module capable of effectively relieving heat and pressure inside the battery module when a thermal event occurs in the battery module.

In particular, according to the venting guide unit of the present disclosure, a hole may be formed in a trigger battery cell having thermal abnormality signs, so that high-temperature gas, particles, etc. from the trigger battery cell may be discharged early to the outside of the module case under a low-pressure condition. Accordingly, thermal damage to adjacent battery cells may be reduced.

In addition, the present disclosure may have various other effects, and these will be described in the respective embodiments, or description of effects that may be easily inferred by those skilled in the art will be omitted.

### DESCRIPTION OF DRAWINGS

FIG. 1 is a perspective view schematically illustrating a battery module according to an embodiment of the present disclosure.
FIG. 2 is an exploded perspective view of the battery module in FIG. 1.
FIG. 3 is a perspective view showing a cell stack of FIG. 2.
FIG. 4 is a perspective view showing a part of a module case according to an embodiment of the present disclosure.
FIG. 5 is a partial enlarged view of FIG. 4.
FIG. 6 is a perspective view showing a venting guide unit according to an embodiment of the present disclosure.
FIG. 7 is a diagram showing an example in which a venting guide unit is applied to a gas venting hole in the battery module according to an embodiment of the present disclosure.
FIG. 8 is a schematic sectional view showing the battery module according to an embodiment of the present disclosure.
FIG. 9 is an enlarged view showing a region A of FIG. 8.
FIG. 10 is a diagram corresponding to FIG. 9 and showing an example in which a needle portion is popped up from the gas venting hole as a needle stopper member is broken.
FIG. 11 is a diagram showing an example in which a cell stack and a bus bar frame according to an embodiment of the present disclosure are assembled.
FIG. 12 is a diagram showing a bus bar frame to which a frame cover and a compression bus bar are coupled in FIG. 11.
FIG. 13 is a schematic sectional view showing the cell stack and the bus bar frame assembled with each other according to an embodiment of the present disclosure.
FIG. 14 is a diagram schematically showing a vehicle including a battery pack according to an embodiment of the present disclosure.

### BEST MODE

Hereinafter, preferred embodiments of the present disclosure will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

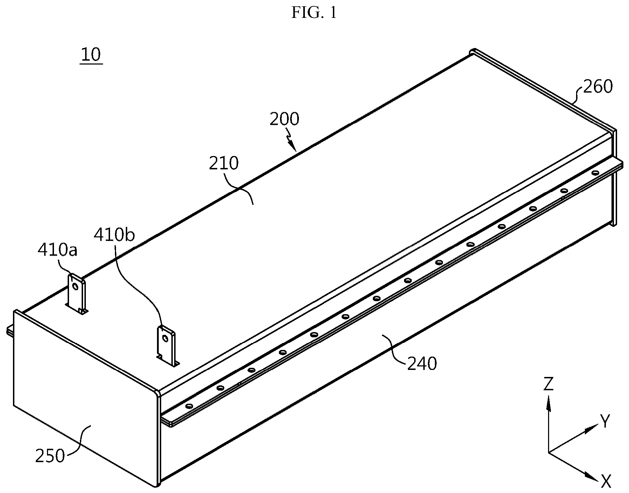

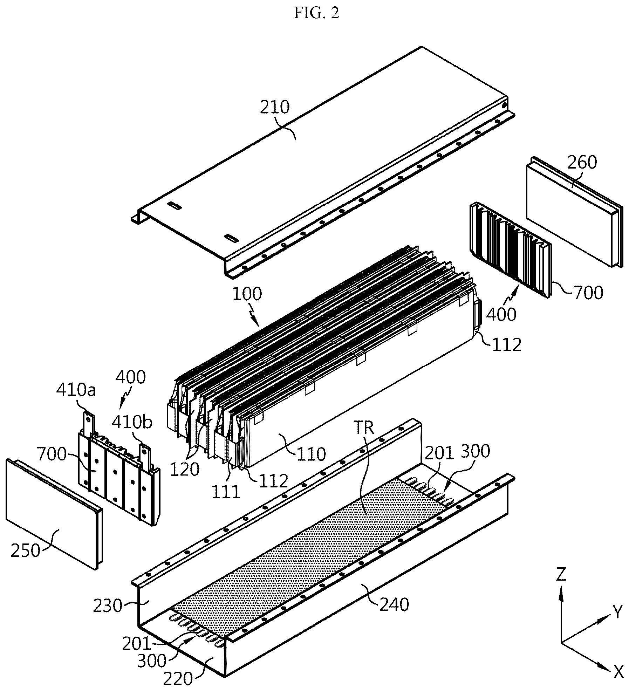

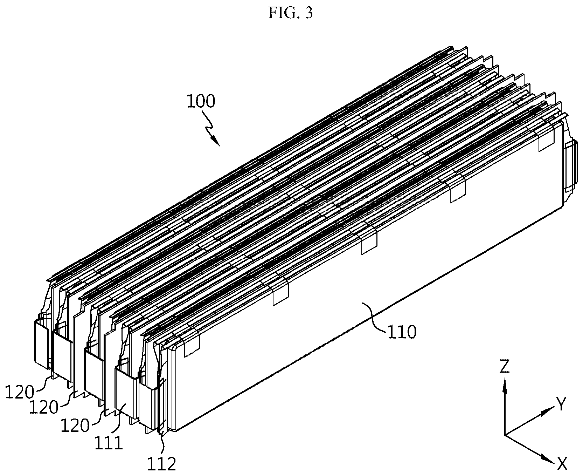

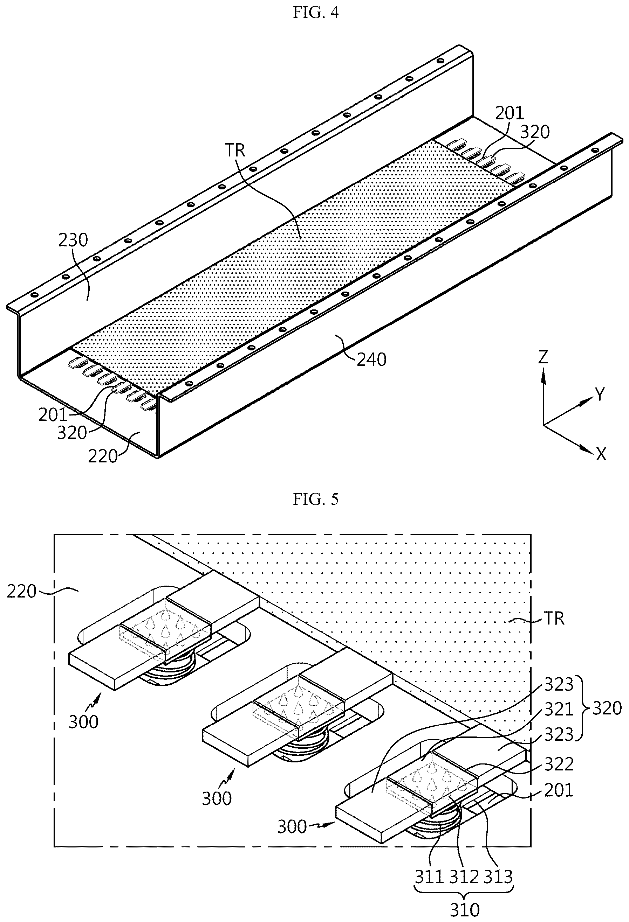

FIG. 1 is a perspective view schematically illustrating a battery module according to an embodiment of the present disclosure, FIG. 2 is an exploded perspective view of the battery module in FIG. 1, FIG. 3 is a perspective view showing a cell stack of FIG. 2, and FIG. 4 is a perspective view showing a part of a module case according to an embodiment of the present disclosure.

Referring to FIGS. 1 to 4, the battery module 10 according to an embodiment of the present disclosure includes a cell stack 100 having stacked battery cells 110, a module case 200 configured to accommodate the cell stack 100 and having a gas venting hole 201 formed in a bottom plate 220, and a venting guide unit 300 disposed in the gas venting hole 201.

The cell stack 100 is prepared by horizontally stacking a plurality of battery cells 110 to be erected, as shown in FIGS. 2 and 3. The battery cell 110 according to this embodiment is a pouch-type battery cell 110. The pouch-type battery cells 110 may be stacked in one direction in a state where broad surfaces thereof are erected. The pouch-type battery cell 110 and includes an electrode lead 111, an electrode assembly, an electrolyte, and a pouch case for sealing the electrode assembly and the electrolyte.

The pouch-type case may include two pouch sheets, and at least one of them may have a recess formed therein. An electrode assembly and an electrolyte are received inside the recess, and the edges of the two pouch sheets are thermally fused. In this pouch-type battery cell 110, a portion where the pouch sheets are thermally fused to be sealed is called a sealing portion. The electrode lead 111 has one end connected to the electrode assembly inside the pouch case and the other end protruding to the outside of the pouch case, and a portion between the one end and the other end is fixed into the sealing portion when the pouch sheets are thermally fused. A portion of the electrode lead 111 exposed to the outside of the pouch case may function as an electrode terminal of the pouch-type battery cell 110.

For reference, the pouch-type battery cell 110 that packages an electrode assembly with two pouch sheets has four sealing portions. Here, the four sealing portions refer to a front sealing portion and a rear sealing portion at which the electrode leads 111 protrude, and two side sealing portions extending in the longitudinal direction of the electrode assembly. Meanwhile, a pouch-type battery cell 110 that packages an electrode assembly by folding one pouch sheet has three sealing portions. Here, the three sealing portions refer to a front sealing portion and a rear-side sealing portion at which the electrode leads 111 protrude, and one side sealing portion. In particular, in the pouch-type battery cell 110, the front sealing portion and the rear sealing portion are referred to as a cell terrace 112.

Meanwhile, the cell stack 100 according to this embodiment further includes battery cells 110 and barrier plates 120 for partitioning the battery cells 110. The barrier plate 120 will be described later for convenience of explanation.

The module case 200 may include a case body and a pair of end covers 250, 260, as shown in FIGS. 1 and 2.

The case body may include a top plate 210 covering the upper portion of the cell stack 100, a bottom plate 220 covering the lower portion of the cell stack 100, and a pair of side plates 230, 240 covering both sides of the cell stack 100, respectively.

The bottom plate 220 and the pair of side plates 230, 240 may be formed integrally. The bottom plate 220 and the pair of side plates 230, 240 provided integrally are also referred to as a U-frame. The U-frame and the top plate 210 may be coupled by bolting, welding, adhesion, or the like. Meanwhile, unlike this embodiment, the top plate 210, the bottom plate 220, and the pair of side plates 230, 240 may be formed integrally in a rectangular tube shape. The end covers 250, 260 may be coupled to open front and rear sides of the case body.

In this embodiment, referring to FIGS. 1 and 2, the top plate 210 may have a terminal passing hole through which a terminal bus bar of the battery module 10 may be drawn out upward. The terminal bus bar includes a positive electrode terminal bus bar 410a and a negative electrode terminal bus bar 410b. However, unlike this embodiment, the terminal bus bar may be designed to face forward by penetrating, for example, the end cover 250.

A thermal resin TR may be applied to the bottom plate 220. The thermal resin TR promotes heat exchange between the battery cells 110 and the bottom plate 220 and increases the fixation of the battery cells 110 to the bottom plate 220. The battery cells 110 are provided to be stacked in the width direction of the bottom plate 220 in a state where broad surfaces thereof are erected. In this case, for all of the battery cells 110, lower edge surfaces may contact the thermal resin TR. Therefore, heat from each battery cell 110 is transferred to the bottom plate 220 through the thermal resin TR, so that the heat of the battery cells 110 may be efficiently dissipated to the outside during charging and discharging.

Referring to FIG. 2 or 4 again, the bottom plate 220 has a gas venting hole 201. The gas venting hole 201 prevents a pressure difference between the inside and the outside of the module case 200 from occurring under normal circumstances, and prevents excessive heat from being accumulated inside the battery module 10 by discharging high-temperature gas, etc. emitted from the battery cell 110 when a thermal event occurs. In addition, since gas may be discharged to the outside through the gas venting hole 201, it is possible to prevent the battery module 10 from collapsing or exploding due to a rapid increase in internal pressure.

The gas venting hole 201 may be provided in the lower region of the cell terrace 112 of the battery cell 110.

Specifically, the gas venting hole 201 according to this embodiment may be provided in plurality at predetermined intervals along the width direction of the bottom plate 220, as illustrated in FIG. 2. When the cell stack 100 is accommodated in the module case 200, the gas venting holes 201 may be provided at locations corresponding vertically to the cell terraces 112 of the pouch-type battery cells 110. The pouch-type battery cell 110 of this embodiment has two cell terraces 112 at the front and rear sides. Corresponding to the structure of the pouch-type battery cell 110, the gas venting holes 201 according to this embodiment may be provided at the front and rear sides of the bottom plate 220 of the module case 200, respectively.

That is, a plurality of gas venting holes 201 may be provided in the bottom plate 220 to correspond to the number and positions of the cell terraces 112 of the pouch-type battery cells 110. The number of the gas venting holes 201 is plural, and the gas venting holes 201 may be provided at regular intervals along the width direction (X direction) at positions close to both ends along the longitudinal direction (Y direction) of the bottom plate 220.

In addition, as shown in FIG. 2, a thermal resin may be configured to be distributed on the bottom plate 220 only to the position adjacent to the gas venting holes 201 such that the gas venting holes 201 are not blocked.

Preferably, the gas venting holes 201 may be provided at the positions vertically corresponding to the cell terrace 113 in the pouch-type battery cells 110.

Secondary batteries may generate gas due to a side reaction during charging and discharging. In particular, if a large amount of gas is generated during overcharging and discharging, the internal pressure rises significantly, resulting in a swelling phenomenon, and if this worsens, the bonding strength of the thermally fused sealing portion may be lowered, so that the corresponding portion may rupture and gas may be discharged. At this time, among the sealing portions of the pouch-type battery cell 110, the cell terrace 112 has electrode leads 111 interposed therein, so the cell terrace 112 generates relatively more heat and has lower bonding strength than other portions. Due to this, the cell terrace 112 of the pouch-type battery cell 110 is most likely to be damaged when the internal pressure increases.

Thus, in the battery module 10 according to an embodiment of the present disclosure, the gas venting holes 201 are formed at both edge areas of the bottom plate 220 corresponding vertically to the cell terrace 112 so that gas, etc. emitted when the cell terrace 112 is damaged may be immediately discharged to the outside of the battery module 10.

According to the above configuration, for example, when high-temperature gas or the like is ejected from a trigger battery cell 110 in which a thermal event has occurred, among the battery cells 110, the high-temperature gas or the like is easily discharged in the downward direction of the module case 200 through the gas venting holes 201. In this case, other battery cells 110 adjacent to the trigger battery cell 110 may be prevented from being significantly damaged by heat. Also, a large amount of gas may be quickly discharged to the outside of the battery module 10, thereby preventing the internal pressure of the battery module 10 from rapidly increasing.

Meanwhile, the battery module 10 according to an embodiment of the present disclosure may include a venting guide unit 300 having a needle member 310 configured to be popped up from the gas venting hole 201 to make a hole in the battery cell 110, and a needle stopper member 320 configured to prevent the needle member 310 from being popped while deformation by heat or an external force does not occur.

The venting guide unit 300 may be provided for each gas venting hole 201, as shown in FIGS. 2 and 4. In addition, the gas venting hole 201 and the venting guide unit 300 may be provided at the front and rear sides of the bottom plate 220 of the module case 200.

As described in detail below, in the battery module 10 according to the present disclosure, since the venting guide unit 300 is installed in the gas venting hole 201, when a thermal event occurs, a hole is made in the cell terrace 112 of the battery cell 110, and heat energy may be released early from the inside of the battery cell 110 through the hole.

Referring to FIGS. 4 to 7 mainly, the main components of the venting guide unit 300 will be described. The venting guide unit 300 includes a needle member 310 and a needle stopper member 320.

First, the needle member 310 is a component that causes a crack or makes a hole in the pouch case of the battery cell 110 that overheats during charging and discharging, thereby inducing gas, etc., inside the battery cell 110 to be discharged. In particular, the battery module 10 of the present disclosure is configured so that, when a thermal event occurs, the needle member 310 damages a specific part of the battery cell 110, allowing high-temperature gas, etc., inside the battery cell 110 to be discharged in a specific direction.

For example, the battery module 10 of the present disclosure may be configured so that the needle member 310 may be popped up from the gas venting hole 201 when a thermal event occurs, such that the cell terrace 112 of the battery cell 110 may be punctured or damaged. According to this configuration, for example, if the needle member 310 is popped up from the lower portion of the cell terrace 112 in a state where gas is trapped in the cell terrace 112, a hole is formed in the cell terrace 112, and at this time, gas may escape from the inside of the battery cell 110 and be directionally vented in the lower direction of the bottom plate 220 through the gas venting hole 201. Meanwhile, even if the needle member 310 is popped up in a state where the cell terrace 112 is not expanded, if the cell terrace 112 expands later, the cell terrace 112 may be torn or the crack may become larger due to the needle member 310, so that gas may be discharged intensively in the cell terrace 112 to the outside.

Specifically, the needle member 310 may include an elastic member 311 vertically arranged in the gas venting hole 201, a needle portion 312 coupled to a top end of the elastic member 311, and an elastic body fixing portion 313 coupled to a bottom end of the elastic member 311 and fixed to the bottom plate 220 of the module case 200.

In this embodiment, a compression spring is employed as the elastic member 311. However, as an alternative to the compression spring, any compressible and extensible structure, such as elastic rubber or bellows, may be employed as the elastic member 311.

The needle portion 312 may include a needle plate 312a coupled to the top end of the elastic member 311 and at least one needle 312b protruding from the needle plate 312a.

The needle plate 312a is preferably made of a material having excellent heat resistance and may be provided in a plate shape. The needle plate 312a and the compression spring may be coupled by welding or bonding, for example.

The needle 312b has a tip. For example, the needle 312b may have a cone, rod, pin shape, etc., as long as it has a tip that is able to form a hole in the pouch case. The needle 312b may be formed integrally with the needle plate 312a or may be provided in a structure that may be attached to and detached from the needle plate 312a.

One or more needles 312b may be provided. For example, when a plurality of needles 312b are provided as in this embodiment, a plurality of holes may be formed in the cell terrace 112. In addition, in the case where the cell stack 100 includes a plurality of battery cells 110 horizontally stacked as in this embodiment, the cell terraces 112 of adjacent battery cells 110 may expand simultaneously due to heat transfer. At this time, when the cell terraces 112 of the adjacent battery cells 110 are located in an upper region of the plurality of needles 312b, holes may be formed in all of the cell terraces 112.

The elastic body fixing portion 313 is preferably made of a material having excellent heat resistance and may be provided in a plate shape. The elastic body fixing portion 313 and the compression spring may be coupled by welding or bonding, for example.

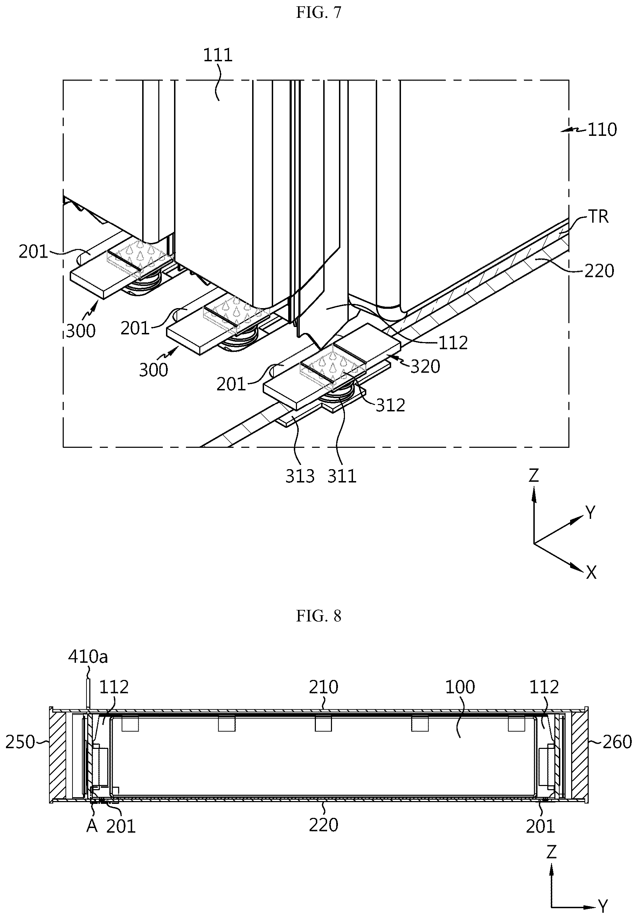

The elastic body fixing portion 313 according to this embodiment may be attached to the lower surface of the bottom plate 220. For example, the elastic body fixing portion 313 may be positioned at the lower portion of the gas venting hole 201, as shown in FIG. 7, and may have both ends welded or adhesively coupled to the bottom plate 220 of the module case 200. At this time, the compression spring may be configured to be vertically arranged inside the gas venting hole 201 at the center of the elastic body fixing portion 313. Meanwhile, unlike this embodiment, the elastic body fixing portion 313 may be formed integrally with the bottom plate 220 of the module case 200.

The compression spring may be positioned within the gas venting hole 201 by the elastic body fixing portion 313 and may be compressed by the needle stopper member 320.

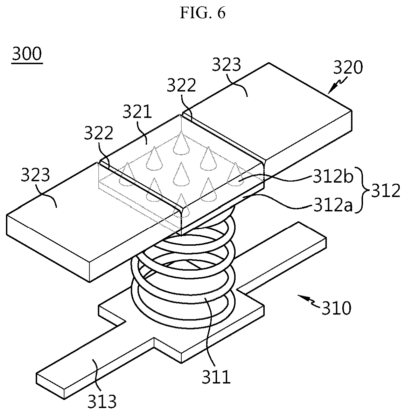

Referring to FIGS. 5 and 6, the needle stopper member 320 may include a blocking portion 321 that blocks the needle portion 312 at the upper portion of the gas venting hole 201 and a stopper fixing portion 323 connected to the blocking portion 321 and fixed to the bottom plate 220 of the module case 200.

At least one end of the stopper fixing portion 323 may be fixedly coupled to the upper surface of the bottom plate 220 of the module case 200. For example, in this embodiment, the stopper fixing portion 323 may be provided in a form extending from one side and the other side of the blocking portion 321 and attachable to the upper surface of the module case 200. Various methods may be employed to fix the stopper fixing portion 323 to the bottom plate 220 of the module case 200, such as welding, bonding, and hooking.

The blocking portion 321 may be arranged vertically above the needle plate 312a. For example, the blocking portion 321 may be arranged to face the needle plate 312a so as to prevent the needle plate 312a from being popped up by the compression spring. At this time, at least one needle 312b may be configured to be stuck in the blocking portion 321. Although not illustrated in detail in the drawings, the blocking portion 321 may have a hole into which the needle 312b may be interposed.

In addition, the blocking portion 321 is formed integrally with the stopper fixing portion 323 fixed to the upper surface of the bottom plate 220 of the module case 200. Therefore, even if the blocking portion 321 receives an external force by the compression spring, a reaction force is generated in the blocking portion 321, so that the needle plate 312a is not popped up.

The needle stopper member 320 including the blocking portion 321 and the stopper fixing portion 323 as described above may be made of a material heat-meltable at a predetermined temperature. In addition, the needle stopper member 320 may have a notch line 322 so as to be broken by a predetermined pressure.

According to this configuration, the needle portion 312 may not be popped up from the gas venting hole 201 because it is normally blocked by the needle stopper member 320. However, if the needle stopper member 320 is damaged by external pressure or thermally melted to be detached from the bottom plate 220 of the module case 200 or partially melt and disappear, the needle portion 312 may be popped up from the gas venting hole 201. At this time, the needle portion 312 may make a crack or hole in the pouch case of the battery cell 110. Then, gas or heat energy inside the battery cell 110 may be quickly discharged to the outside through the gas venting hole 201. That is, high temperature gas or high temperature particles generated in the battery cell 110 where a thermal event has occurred are allowed to escape from the module case 200 to the outside through the gas venting hole 201 via the shortest path, thereby minimizing heat accumulation inside the module case 200 and thermal runaway propagation between the battery cells 110.

At least one of the blocking portion 321 and the stopper fixing portion 323 constituting the needle stopper member 320 may be made of a heat-meltable resin material, and the other may be made of a metal material having excellent heat resistance. For example, the blocking portion 321 may be made of a Styrofoam, rubber, or plastic material, and the stopper fixing portion 323 may be made of a metal material such as aluminum, copper, or steel.

If the needle stopper member 320 is configured in this manner, heat generated from the battery cell 110 may be absorbed into the stopper fixing portion 323 through the thermal pad and/or the bottom plate 220 of the module case 200, and the heat absorbed into the stopper fixing portion 323 may be transferred to the blocking portion 321. As a result, the blocking portion 321 melts and is detached from the stopper fixing portion 323, and at this time, the needle portion 312 may be popped up from the gas venting hole 201 due to the elastic force of the compression spring.

The needle stopper member 320 may be provided such that when an external force of a certain intensity or greater is applied together with heat, the boundary between the blocking portion 321 and the stopper fixing portion 323 may be disconnected. To this end, the needle stopper member 320 according to this embodiment has a notch line 322 at the boundary between the blocking portion 321 and the stopper fixing portion 323. The notch line 322 may be provided in the form of a groove that is recessed to a predetermined depth from the surface of the needle stopper member 320 and continues intermittently or continuously in the width direction. The notch line 322 of the needle stopper member 320 may be broken by an increase in the internal pressure of the module case 200 or by the wind pressure of the gas escaping through the gas venting hole 201, thereby separating the blocking portion 321 and the stopper fixing portion 323. That is, the needle stopper member 320 may cause the blocking portion 321 to be detached from the stopper fixing portion 323 due to pressure rather than heat.

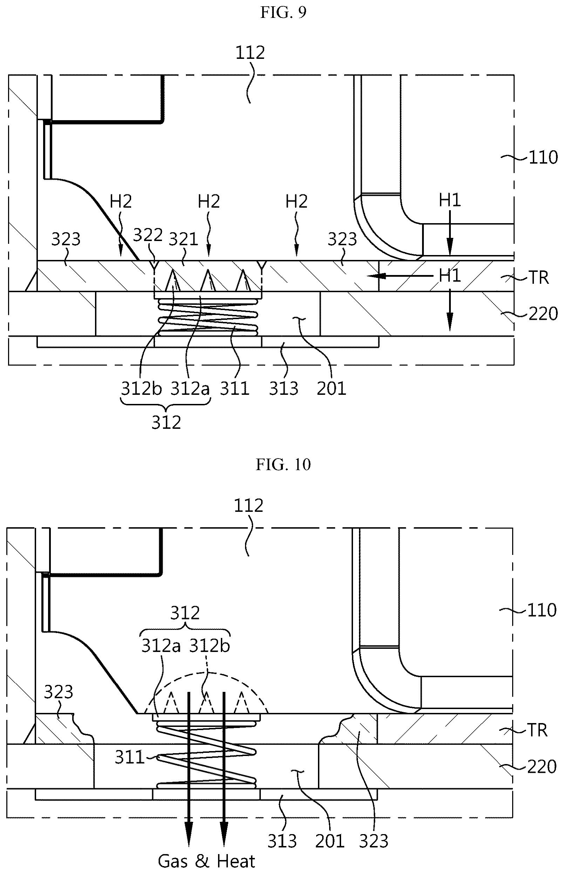

FIG. 8 is a schematic sectional view showing the battery module 10 according to an embodiment of the present disclosure, FIG. 9 is an enlarged view showing a region A of FIG. 8, and FIG. 10 is a diagram corresponding to FIG. 9 and showing an example in which a needle portion 312 is popped up from the gas venting hole 201 as a needle stopper member 320 is damaged.

Hereinafter, an operation example of the venting guide unit 300 according to an embodiment of the present disclosure is briefly described with reference to FIGS. 8 to 10.

As shown in FIG. 8, in the battery module 10 according to an embodiment of the present disclosure, gas venting holes 201 are formed at the front and rear sides of the bottom plate 220 of the module case 200. Here, the front and rear sides of the bottom plate 220 of the module case 200 mean positions corresponding to the lower portion of the front cell terrace 112 of the battery cell 110 and the lower portion of the rear cell terrace 112 of the battery cell 110.

In addition, the battery module 10 includes a venting guide unit 300 installed in the gas venting hole 201, as shown in FIG. 9. As described above, while the needle stopper member 320 is not deformed by heat or external force, the needle member 310 is blocked by the needle stopper member 320 and is not popped out from the gas venting hole 201. That is, while there is no thermal event inside the battery module 10, the needle portion 312 is not popped out from the gas venting hole 201 and thus does not cause damage to the battery cell 110.

However, if the temperature of the battery cell 110 rapidly increases due to, for example, a short-circuit issue of the battery cell 110, thermal deformation may occur in the needle stopper member 320. At this time, the path through which heat is transferred from the battery cell 110 to the needle stopper member 320 may be diverse. For example, as indicated by 'H1' in FIG. 9, heat may be transferred from the battery cell 110 to the stopper fixing portion 323 through the thermal resin TR or the bottom plate 220 of the module case 200. In addition, if gas is generated inside the battery cell 110 so that the cell terrace 112 is expanded, and thus if the blocking portion 321 of the needle stopper member 320 receives heat and pressure from the expanded cell terrace 112 as indicated by 'H2', the blocking portion 321 may melt or the notch line 322 may be cut.

In this way, when deformation occurs in the needle stopper member 320 due to heat or external force, as shown in FIG. 10, the elastic force of the compression spring 311 becomes greater than the reaction force of the blocking portion 321, so that the compression spring 311 pushes the needle portion 312 up over the gas venting hole 201. Then, a hole or crack may be created in the cell terrace 112 by the needle 312b that is popped up over the gas venting hole 201. As a result, high-temperature gas, particles, etc. in the battery cell 110 may be effectively directionally vented to the outside through the gas venting hole 201 of the module case 200 at an early stage. Therefore, the venting guide unit 300 of the present disclosure may prevent heat and pressure inside the battery module 10 from accumulating, so that thermal runaway of the battery module 10 may be delayed remarkably.

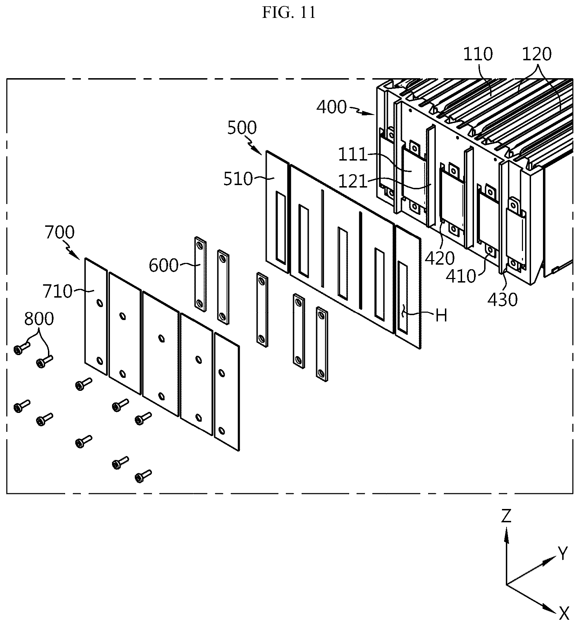

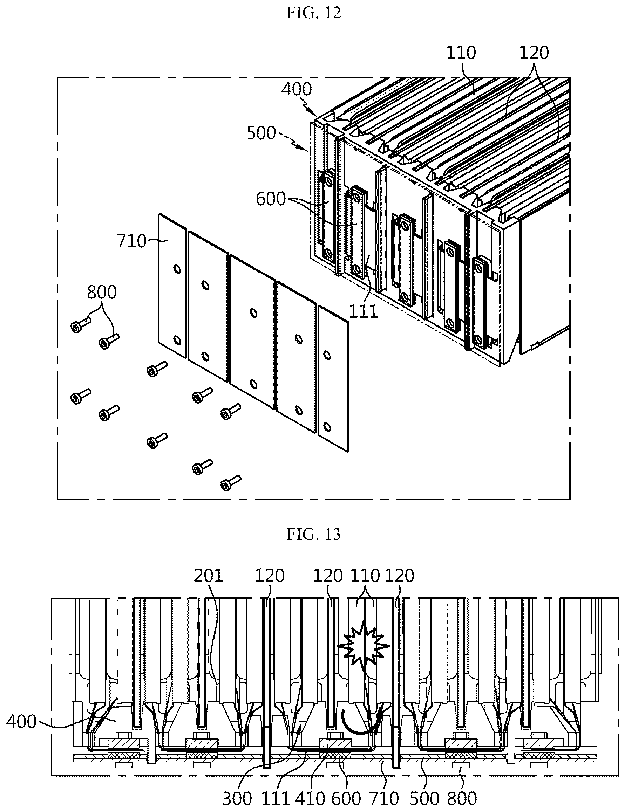

FIG. 11 is a diagram showing an example in which a cell stack 100 and a bus bar frame 400 according to an embodiment of the present disclosure are assembled, FIG. 12 is a diagram showing a bus bar frame 400 to which a frame cover 500 and a compression bus bar are coupled in FIG. 11, and FIG. 13 is a schematic sectional view showing the cell stack 100 and the bus bar frame 400 assembled with each other according to an embodiment of the present disclosure.

Referring to FIGS. 2 and 11 to 13, the battery module 10 according to an embodiment of the present disclosure may further include a plurality of bus bars 410, 600 electrically connected to the electrode leads 111 provided in the battery cells 110, a bus bar frame 400, a frame cover 500, and a close-contact cover 700.

The bus bars 410, 600 may be made of a metal such as copper or aluminum having electrical conductivity and provided in the form of a bar.

The bus bar frame 400 may be provided in a plate shape that supports the bus bars 410, 600 and may cover the front and rear portions of the cell stack 100, respectively. Here, the bus bar frame 400 may be made of an electrically insulating material such as plastic. In addition, the bus bar frame 400 may have lead slots 420 through which the electrode leads 111 may pass. The electrode leads 111 of the battery cells 110 may pass through the lead slots 420 and be attached to the bus bars in a predetermined pattern.

In particular, the battery module 10 of this embodiment is configured so that the electrode leads 111 may be fixed to the bus bars by compressing the electrode leads 111 onto the bus bars instead of welding. Accordingly, the assembly time of the battery module 10 may be shortened and the assembly process may be performed more easily.

Specifically, the bus bar according to an embodiment of the present disclosure includes a first bus bar 410 and a second bus bar 600. Referring to FIGS. 11 and 12, the first bus bar 410 and the second bus bar 600 may be overlapped with the electrode lead 111 interposed therebetween. In addition, the electrode lead 111 may be compressively fixed between the first bus bar 410 and the second bus bar 600. At this time, by fastening the first bus bar 410 and the second bus bar 600 using a fastening member 800 such as a bolt, the electrode lead 111 may be stably maintained in a compressed state between the first bus bar 410 and the second bus bar 600.

The frame cover 500 is provided in the form of a pad made of a material having low thermal conductivity and excellent heat resistance, such as silicone, aerogel or mica, and may be coupled to face the bus bar frame 400, as shown in FIG. 12. The frame cover 500 may include a plurality of cover plates 510. The cover plates 510 may be provided to respectively correspond to the partition surfaces of the bus bar frame 400 partitioned by barriers 430 protruding from the bus bar frame 400 and distal ends 121 of the barrier plate 120, explained later. Here, the barrier 430 and the distal end 121 of the barrier plate 120 may play a role of preventing a short circuit between the electrode leads 111.

When the frame cover 500 is attached to the bus bar frame 400, the lead slots 420 of the bus bar frame 400 may be covered. In this configuration, when a thermal event occurs, high-temperature gas or flame may not leak out to the front or rear side of the cell stack 100 through the lead slots 420.

The electrode leads 111 may be bent and arranged at the front surface of the corresponding first bus bars 410 according to a predetermined pattern, and then the frame cover 500 may be attached to the bus bar frame 400. Here, the frame cover 500 has a bus bar insert hole H. The second bus bar 600 may be configured to be coupled to the first bus bar 410 with the electrode lead 111 interposed therebetween through the bus bar insert hole

H.

The close-contact cover 700 is a component for closely contacting the frame cover 500 to the bus bar frame 400 and also for closely contacting the second bus bar 600 toward the electrode lead 111 and the first bus bar 410.

The close-contact cover 700 may include a plurality of close-contact plates 710, as illustrated in FIG. 12. The close-contact plates 710 are provided in a number corresponding to the bus bars, and the close-contact plates 710 may be coupled to be fixed to each other by each corresponding bus bar and a fastening member 800. In addition, the close-contact plates 710 may be attached between the distal ends 121 of the barrier plates 120 penetrating the bus bar frame 400 and the barriers 430 protruding from the bus bar frame 400. The close-contact plate 710 may be made of a material having high mechanical rigidity and flame retardant properties. For example, the close-contact plate 710 may be made of a rigid material having a high melting point, such as SUS, that is insulated, or a rigid material having fire resistance and insulation properties.

The cell stack 100 according to an embodiment of the present disclosure may include a plurality of barrier plates 120 interposed between the battery cells 110 at predetermined intervals along one direction to restrict the movement of heat or gas between the battery cells 110, as described above.

The distal end 121 of each of the plurality of barrier plates 120 may be fitted into the bus bar frame 400 so that the battery cells 110 and the gas venting holes 201 are partitioned into a predetermined number, as shown in FIGS. 12 and 13.

The barrier plate 120 may be provided in the form of a compressible pad made of a material with excellent heat resistance and/or fire resistance, such as silicone, aerogel, mica, etc.

As illustrated in FIG. 13, the barrier plate 120 may perform a thermal barrier function that blocks heat, such as a flame, generated from an ignited battery cell 110 from spreading in the stacking direction of the battery cells 110. Accordingly, heat propagation to neighboring battery cells 110 may be minimized. The barrier plate 120 may block not only heat but also high-temperature gas, flame, discharge, etc. generated from the battery cells 110. As a result, the barrier member may partition or separate the battery cells 110 to prevent flame, etc. from spreading between the battery cells 110.

Meanwhile, a battery pack (not shown) according to the present disclosure may include one or more battery modules 10 described above. The battery pack according to the present disclosure may further include a master BMS (Battery Management System) for integrated control of charging and discharging of at least one battery module 10, a current sensor, a fuse, and a pack case for accommodating the components described above.

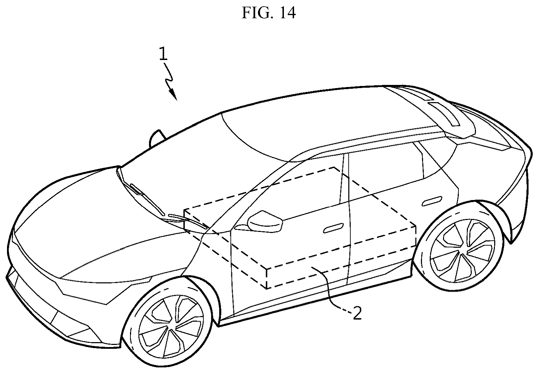

Referring to FIG. 14, the battery pack according to the present disclosure may be used as a driving energy source for an electric vehicle. That is, the battery pack may be used as an electric energy source that provides a driving power to a motor to operate the vehicle. The battery pack may be charged or discharged by an inverter according to the operation of the motor and/or the internal combustion engine. The battery pack may be charged by a regenerative charging device combined with a brake. The battery pack may be electrically connected to the motor of the vehicle through the inverter.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

Also, although terms indicating directions such as upward, downward, left, and right are used in this specification, it is obvious to those skilled in the art that these terms are only for convenience of explanation and may vary depending on the location of the target object or the location of the observer.

## Claims

1. A battery module comprising:
a cell stack including stacked battery cells;
a module case configured to accommodate the cell stack and having a gas venting hole formed in a bottom plate located at a lower portion of the cell stack; and
a venting guide unit including a needle member configured to be popped up from the gas venting hole to make a hole in the battery cell, and a needle stopper member configured to prevent the needle member from being popped up while deformation by heat or external force does not occur.

2. The battery module according to claim 1,
wherein the needle stopper member is made of a material heat-meltable at a predetermined temperature.

3. The battery module according to claim 1,
wherein the needle stopper member has a notch line to be broken at a predetermined pressure.

4. The battery module according to claim 1,
wherein the needle member includes:
an elastic member disposed vertically in the gas venting hole;
a needle portion coupled to a top end of the elastic member; and
an elastic body fixing portion coupled to a bottom end of the elastic member and fixed to the bottom plate of the module case.

5. The battery module according to claim 4,
wherein the needle stopper member includes:
a blocking portion configured to block the needle portion at an upper portion of the gas venting hole; and
a stopper fixing portion connected to the blocking portion and fixed to the bottom plate of the module case.

6. The battery module according to claim 5,
wherein a notch line is provided at a boundary of the blocking portion and the stopper fixing portion.

7. The battery module according to claim 5,
wherein at least one of the blocking portion and the stopper fixing portion is made of a heat-meltable resin material.

8. The battery module according to claim 5,
wherein the needle portion includes:
a needle plate coupled to the top end of the elastic member and located at a lower portion of the blocking portion; and
at least one needle configured to protrude from the needle plate.

9. The battery module according to claim 8,
wherein the at least one needle is configured to be stuck in the blocking portion.

10. The battery module according to claim 1,
wherein the battery cells are pouch-type battery cells,
wherein the gas venting hole is provided in plurality at predetermined intervals along a width direction of the bottom plate, and
wherein the gas venting hole is provided at a location vertically corresponding to a cell terrace formed by thermally fusing pouch sheets in the pouch-type battery cell.

11. The battery module according to claim 10,
wherein the venting guide unit is provided in each of the gas venting holes, and
wherein the gas venting hole and the venting guide unit are provided at a front side and a rear side of the bottom plate of the module case.

12. The battery module according to claim 1,
wherein the module case includes:
a top plate configured to cover an upper portion of the cell stack;
a bottom plate configured to cover the lower portion of the cell stack;
a pair of side plates configured to cover both sides of the cell stack, respectively; and
a pair of end covers configured to cover a front side and a rear side of the cell stack, respectively.

13. The battery module according to claim 1, further comprising:
bus bars electrically connected to electrode leads provided to the battery cells; and
a bus bar frame configured to support the bus bars and having lead slots through which the electrode leads passes, the bus bar frame being mounted to a front portion or a rear portion of the cell stack,
wherein the bus bars include a first bus bar and a second bus bar arranged to overlap each other with the electrode lead being interposed therebetween, and the electrode lead is compressively fixed between the first bus bar and the second bus bar.

14. The battery module according to claim 13,
wherein the battery cells are pouch-type battery cells, which are stacked in one direction in a state where broad surfaces thereof are erected,
wherein the cell stack includes a plurality of barrier plates interposed between the battery cells at predetermined intervals along the one direction to restrict movement of heat or gas between the battery cells, and
wherein each of the plurality of barrier plates has a distal end fitted into the bus bar frame so that the battery cells and the gas venting holes are partitioned into a predetermined number.

15. A battery pack comprising the battery module according to any one of claims 1 to 14.
